Europäisches Patentamt

European Patent Office

Office européen des brevets

(19)

(11) EP 0 861 803 A1

(12) EUROPEAN PATENT APPLICATION

(43) Date of publication:
02.09.1998 Bulletin 1998/36

(51) Int Cl.$^6$: C01B 7/04

(21) Application number: 98301324.4

(22) Date of filing: 24.02.1998

(84) Designated Contracting States:
AT BE CH DE DK ES FI FR GB GR IE IT LI LU MC NL PT SE
Designated Extension States:
AL LT LV MK RO SI

(30) Priority: 27.02.1997 US 806486

(71) Applicant: AIR PRODUCTS AND CHEMICALS, INC.
Allentown, PA 18195-1501 (US)

(72) Inventors:
• Weimer, Robert Fredrick
  Allentown, PA 18104 (US)
• Tao, John Chao-Chiang
  Allentown, PA 18103 (US)
• Sircar, Shivaji
  Wescosville, PA 18106 (US)

(74) Representative: Smart, Peter John
W.H. BECK, GREENER & CO
7 Stone Buildings
Lincoln's Inn
London WC2A 3SZ (GB)

(54) **Fixed bed temperature swing catalytic process for chemical reactions**

(57) Chemical reactions are conducted using temperature swing adsorption techniques in which a feed stream (18,19) containing reactant "A" is contacted with a heated fixed catalyst bed (10) to provide product "C" and modified catalyst (step a); the spent bed (11) is further heated (14) (step b); a second stream (23) containing reactant "B" is contacted with the further heated spent bed (12) to provide product "D" and regenerate the catalyst (step c); and the regenerated bed (13) is cooled (16) for reuse (10) in next step a (step d). The process has particular application to the oxidation of HCl by a Deacon reaction catalyst containing metal oxide species (step a) and subsequent oxidation of the resultant metal chloride species to regenerate the metal oxide species and produce chloride (step c). The effluents from steps (c) can provide at least part of the feed to a step (a).

EP 0 861 803 A1

## Description

This invention relates to a fixed bed catalytic process using temperature swing adsorption techniques. In another aspect it relates to a method of using multiple interchangeable fixed bed catalytic reactors in coordinated steps and conditions to complete a multi-step chemical process. In still another aspect it relates to a method of recovering chlorine from hydrogen chloride.

For many years the disposal of by-product hydrogen chloride has been an aggravating industrial problem. Hydrogen chloride is a toxic and corrosive chemical which makes storage and transport difficult. Additionally, HCl contains valuable chlorine which should be recovered for economic reasons. It has, therefore, long been an objective of the chemical industry to develop suitable methods of recovering $Cl_2$ from HCl.

Past and existing processes for conversion of HCl to $Cl_2$ include electrolysis of HCl, oxidation of HCl with various oxidants, and catalytic oxidation of HCl with oxygen or oxygen-containing gas according to the Deacon reaction. Electrolysis processes require high energy consumption, inorganic oxidation involves highly corrosive and toxic intermediates, and the Deacon processes suffer from conversion limitations of thermodynamic equilibrium. There have been a number of attempts to overcome these limitations.

DE-A-1,767,066 (1971) discloses a process for producing chlorine from hydrogen chloride by oxidizing, with an oxygen-containing gas, a chlorinated medium composed of a porous support loaded with magnesium chloride, alkali metal chloride, and a chloride of copper, cadmium or nickel to produce chlorine gas. The oxidized medium is cycled to a chlorination step where it is reacted with the hydrogen chloride.

DE-A-2,813,506 (1978) describes another process in which HCl is oxidized to $Cl_2$ using a molten salt mixture of cuprous and cupric chlorides in two reaction zones through which the molten salts are circulated, first to contact gaseous HCl and $O_2$-containing gas and then, in the second zone, to strip gaseous $Cl_2$ from the salt by reducing the Cu(II) content.

A more promising approach is described in GB-A-2,229,430 (1990) which discloses the recovery of $Cl_2$ from HCl streams by a two stage process using fluidized catalyst cycled between the two stages by fluidized transport. The reactions employ a catalyst of copper on a fluidizable support and the two stages carry out reactions in which HCl is contacted with CuO in one zone to form $CuCl_2$ and water at 100-300°C and then the $CuCl_2$ is contacted with oxygen in the other zone at 300-380°C to form CuO and $Cl_2$. The catalyst containing the CuO is then transported back to the first zone to repeat the process. The advantage of the process is said to be more complete conversion of the HCl, thereby simplifying $Cl_2$ recovery.

The foregoing process is discussed further by Pan et al., "Process for Converting Hydrogen Chloride to Chlorine", Ind. Eng. Chem. Res., 33, 2996-3003, (1994), who present a review of processes in use and proposed for recovery of $Cl_2$ from HCl with particular attention to Deacon-type processes in which HCl is oxidized catalytically to $Cl_2$ and $H_2O$. Analysis of the likely reaction mechanisms is given and several catalyst systems are described with the most favored being silica-supported copper oxide. A description of a two-stage conversion of HCl to $Cl_2$ using fluidized catalyst is presented against a background of earlier unsuccessful proposals using fixed-bed and moving bed reactors. It is stated that "packed or moving beds are ill suited for carrying out the Deacon process".

A variation of the process of GB-A-2,229,430 is presented by Mortensen et al., "A Two-Stage Cyclic Fluidized Bed Process for Converting Hydrogen Chloride to Chlorine", in a preprint believed to have been published in 1995 by R. G. Minet of the Department of Chemical Engineering of the University of Southern California, Los Angeles, CA 90089-1211. In this paper the fluidized bed two-stage operation is described with two alternative modes of operation. In one mode, HCl and $O_2$ are fed to a high temperature (340-400°C) oxidizer with overhead passed to a lower temperature (180-200°C) chlorinator from which a product of $Cl_2$ and $H_2O$ is withdrawn. Catalyst is circulated between the two reactors. In the other mode a three reactor system is used in which a high temperature reactor receives HCl and $O_2$ feed but its fluidized catalyst is not circulated to other reactors. Overhead from this reactor feeds a low temperature reactor which recirculates catalyst with a second high temperature (320-360°C) fluidized reactor receiving only $O_2$ feed (no HCl). The overhead from this latter reactor is passed to the low temperature reactor. These alternative modes of operation are said to be thermally self-sufficient.

While the above-described fluidized bed operations sound attractive from the standpoint of the advantages alleged, processes which rely upon fluidized catalyst transport systems suffer from inherent drawbacks. For example, selection of catalyst and support materials is limited to those which are free-flowing and attrition resistant under the process operating conditions. Also, such processes require equipment for the transfer of solids between the beds which represent a potential source of operational problems. Heating and cooling these solids while they are being transferred introduce difficult engineering challenges. The catalyst and its support can attrit and be lost from the system as fines in the product gas requiring a capture system to avoid releasing particulates into the atmosphere. Since back-mixing in a fluidized adsorption bed is unavoidable, the goal of eliminating hydrogen chloride from the product effluent may be very difficult to achieve. For these and other reasons apparent from the foregoing background discussion, it is necessary to keep trying to develop improved processes for chlorine recovery from hydrogen chloride.

Temperature swing adsorption is a technique finding considerable favor in gas separation processes. Sircar et al, "Activated Carbon for Gas Separation and Storage", Carbon, Vol. 34, No. 1, pp 1-12 (1996) describe temperature swing adsorption (TSA) and pressure swing adsorption (PSA) processes using activated carbon for separation and purification of gas mixtures. A conventional three-column TSA process for removal of trace impurities from an inert gas is described with a schematic diagram. Three steps involving (i) adsorption of the impurity, (ii) heating to desorb the impurity and (iii) cooling to prepare the carbon bed for the adsorption step are coordinated among the three columns. This article also illustrates how multiple vessels can be linked together for cyclic performance through suitable manifold and valving arrangements. A sorption reaction (SR) process is described in which trace hydrocarbons can be removed from contaminated air by first adsorbing the hydrocarbon on activated carbon and then catalytically oxidizing the adsorbed hydrocarbon. While the TSA process is well known in the field of gas separation, to our knowledge there is no suggestion in the prior art of adapting this technique to carry out a series of cyclic chemical reactions such as those involved in the recovery of chlorine from hydrogen chloride.

According to our invention, chlorine is recovered from hydrogen chloride in a sequence of steps using a combination of fixed bed catalytic reactors operating in two distinct temperature ranges. By using fixed bed catalysts instead of fluidized beds, the disadvantages noted above are overcome while retaining the advantages and flexibility of carrying out the reaction in two process steps under the optimum conditions for each step. This process has the potential of higher product purity with a wider choice of catalytic and support materials. It also eliminates any need for a costly system of recycle and HCl removal from the product chlorine.

The process has four steps which can be designated as steps (a), (b), (c) and (d). In step (a) an HCl-containing stream is directed into a defined volume in contact with a fixed bed of Deacon reaction catalyst containing supported metal oxide species. The temperature of step (a) is in the range of 180 to 290°C, preferably 200 to 250°C, and the reaction proceeds to convert at least a portion of said metal oxide to metal chloride species, forming water in the process. Operating on a cyclic basis with one or more other fixed bed catalyst chambers, as described below, it is possible to withdraw from step (a) an effluent stream containing $Cl_2$ as product essentially free of HCl.

After step (a) is completed, the reactor proceeds to step (b) which includes redirecting the HCl-containing stream to another catalytic fixed bed volume for repetition of step (a) while heating the first bed of catalyst having just completed step (a) to a temperature in the range of 300 to 400°C, preferably 350 to 400°C, for performance of step (c) which, under certain conditions, can be combined with step (b).

In step (c), the heated catalyst of step (b) is contacted with an oxygen-containing stream at a temperature in the range of 300 to 400°C, preferably 350 to 400°C, to form metal oxide species in the heated catalyst suitable for use in a repetition of step (a). This reaction produces $Cl_2$ and chlorine-containing gas is withdrawn in an effluent stream.

In the final step (d), the oxygen-containing stream of step (c) is redirected to another volume for repetition of step (c) and the bed of catalyst having just completed step (c) is cooled to a temperature in the range of 180 to 290°C, preferably 200 to 250°C, thereby preparing the catalyst bed for repeating step (a). Under certain conditions, steps (d) and (a) can be combined.

Steps (a) through (d) are carried out in a combination of fixed bed chambers connected so that the process in each chamber progresses repetitively through steps (a) through (d) in sequence and, preferably, step (a) is continuously occurring in one or more chambers. Any appreciable HCl in the effluent of step (c) is reacted with metal oxide catalyst by recycle to a step (a), either directly or through an intermediate Deacon reactor.

Although this invention has been developed primarily for use in recovering chlorine from hydrogen chloride, it also can be used with advantage to carry out any similar chemical reaction in which, like the Deacon process, proceeds by two catalytically assisted mechanisms involving different thermodynamic equilibria wherein each mechanism proceeds most favorably within a temperature range distinct from the other, the total reaction being expressed as A + B $\leftrightarrow$ C + D. In this broader aspect, therefore, the invention is a process for carrying out such a reaction by practicing four steps in multiple fixed bed catalytic reactor zones. These steps include (a) passing a feed stream containing reactant A into a reaction zone wherein said reactant A is contacted with a fixed bed of catalytic material at a temperature within a first "lower" range under conditions operative to convert reactant A to product C and in so doing changing said catalytic material to a modified form; (b) redirecting said feed stream of reactant A into another reaction zone for repetition of step (a) and heating said bed of catalytic material in modified form from step (a) to a temperature within a second "upper" range above and distinct from said lower range of step (a); (c) passing a feed stream containing reactant B into the reaction zone containing the fixed bed of catalytic material in modified form which has been heated in step (b) and contacting said reactant B with said modified catalytic material at a temperature within said upper range under conditions operative to convert reactant B to product D and in so doing changing said modified catalytic material back to a form operative in step (a), withdrawing from this latter zone an effluent stream containing product D; and (d) redirecting said feed stream containing reactant B into another reaction zone for repetition of step (c) and cooling said catalytic material in the reaction zone wherein step (c) has just been completed to a temperature for repetition of step (a). These steps (a) through (d) are carried out in a combination of fixed bed chambers connected so that the process in each chamber progresses repetitively through steps (a) through (d) in sequence. and, preferably, at least one of steps (a) and (c) is continuously occurring in one or more chambers. In this manner the chemical reaction can be carried out very nearly to completion because conditions favoring each mechanism through which the reaction proceeds can be applied independently.

The invention is best understood in connection with its preferred aspect as an improvement on the well known Deacon reaction which dates back more than a century. This reaction involves the reaction of oxygen with hydrogen chloride to form chlorine and water according to the overall formula:

$$2HCl + \tfrac{1}{2}O_2 \leftrightarrow H_2O + Cl_2$$

The reason that the Deacon process has not been popular industrially is that it is an equilibrium controlled reaction which can readily proceed in either direction, depending upon the conditions of pressure and temperature imposed. The inevitable presence of HCl in the chlorine product created severe corrosion problems in recovery equipment. This problem has been addressed by the invention and prior art methods discussed above by choosing the correct catalyst and carrying out the reaction in two phases at different temperature levels. The invention adapts a procedure known as temperature swing adsorption (TSA) to carry out this process efficiently in fixed beds of catalyst which are cycled through multiple steps of the reaction repeatedly without any transfer of catalyst from the vessel.

The most favored catalyst at present is a form of copper oxide or chloride impregnated upon a suitable support. Beginning with the contact of feed HCl with copper oxide, the first phase of the reaction can be illustrated by the formulae:

$$2CuO + 2HCl \leftrightarrow 2Cu(OH)Cl$$

$$CuO + 2HCl \leftrightarrow CuCl_2 + H_2O$$

In the above reactions, the CuO is presented as a solid on a support and the HCl is introduced as a gas, so that the procedure can be viewed as a form of chemi-sorbing of the HCl by the catalyst. The stoichiometry need not be limited to these reactions or even to include either of these reactions as such because many copper oxychloride and hydroxychloride species (such as $Cu_3(OH)_2Cl_4$, and $Cu_2OCl_2$) are potentially available as intermediates in the sorption and desorption reactions. In general, such reactions are described as converting copper oxide species to copper chloride species by contact with the HCl. The temperatures which favor this reaction lie in the range of 180 to 290°C, although for better control it is preferred to operate in the range of 200 to 250°C.

On completion of the chlorination or sorption step, the feed stream containing HCl is redirected to another fixed bed reactor which is prepared to receive it, and the catalyst bed which has just completed the chlorination step is heated in preparation for the oxidation step. The method of heating can depend upon heat sources available but is normally carried out with steam or other fluid heating medium circulated through coils buried in the catalyst bed or by using a jacketed reaction vessel, or both. It is desirable to pass a gas through the catalyst bed while heating in order to enhance radial heat transfer within the catalyst bed. In this way the bed is heated to a temperature in the range of 300 to 400°C, and preferably to at least 350°C for best efficiency in the oxidation reaction.

Following the heating step, an oxygen-containing gas is passed into the heated catalyst bed to bring oxygen into contact with the copper chloride species at a temperature in the range of 300 to 400°C, preferably 350 to 400°C. The oxygen reacts with the copper chloride species in the catalyst to form copper oxide species according to the formulae:

$$2Cu(OH)Cl + \tfrac{1}{2}O_2 \leftrightarrow 2CuO + H_2O + Cl_2$$

$$CuCl_2 + \tfrac{1}{2}O_2 \leftrightarrow CuO + Cl_2$$

Again, the exact stoichiometry of these reactions between oxygen and the copper chloride species is not limited to the above formulae nor even necessarily includes such reactions because it depends upon the identity of the copper chloride species which are formed in the chlorination step. Such information is not needed to practice the invention. Suffice it to say that in the oxidation step of the process copper chloride species are converted to copper oxide species which are operative to catalyze the chlorination or chemi-sorbing phase of the overall reaction. This oxidation step of the process can also be viewed as a regeneration step because it prepares the catalytic material for reuse in the chlorination step during the next portion of the cycle for the fixed bed reactors.

The oxygen-containing gas can be any form of oxygen gas effectively treated to remove contaminants which would interfere with the reactions. Air, oxygen or oxygen diluted with inert gas, such as nitrogen, are all suitable. This gas need not be totally dry but the presence of excessive water would tend to drive certain reversible reactions in the wrong direction since water is a product of the overall reaction. It is desirable to preheat the oxygen-containing gas and it should be passed through the catalyst bed in a flow direction counter-current to that of the flow direction used for the HCl feed gas in step (a). The effluent gas from this step contains $Cl_2$, $H_2O$, unreacted $O_2$, HCl and any nitrogen or other inert gas which entered with the feed oxygen. This effluent is passed to another catalyst bed which is undergoing the chlorination step of the reaction and enters such bed as a portion of the HCl feed gas. In this way the HCl in the effluent of the oxidation step is reacted or adsorbed by the catalyst in the chlorination step so that the effluent from the process is essentially free of HCl, containing only $Cl_2$, $H_2O$ and small amounts of $O_2$ and possibly $N_2$. This product stream can be further processed by known means for recovery of pure chlorine. The absence of HCl in the product, the HCl having been removed by the chemi-sorbing, eliminates the need for further HCl-$Cl_2$ separation downstream with the attendant corrosion problems which made the Deacon process undesirable.

In some cases the amount of HCl in the effluent from the oxidation step is very small, and in such instances a portion or all of this stream can be withdrawn from the process as product. It is preferred, however, that this effluent be recycled to step (a), chlorination, as described above.

In the fourth and final step of the process cycle, the oxygen-containing stream is redirected to another fixed bed chamber ready to proceed with the oxidation step, and the catalyst bed which has just completed the oxidation step is cooled to a temperature in the range of 180 to 290°C, preferably 200 to 250°C, in preparation for a repeat of the chlorination or adsorption step. Cooling is by indirect heat exchange using coils or a reactor jacket or both, and it is desirable to pass a gas through the bed during this cooling to enhance radial heat transfer from the bed to the cooling medium.

The catalyst material can be any catalyst operative in the Deacon process, for example, copper, manganese and iron salts deposited on various inert porous supports. In general, such catalysts are well known and are described in the technical literature and issued patents. Often alkali metal chlorides, such as sodium or potassium chloride, are included, as are salts of rare earth metals. Suitable supports include well known carriers such as silica, alumina, silica-alumina, and various known zeolite molecular sieves. Porosity should be sufficient to provide ample surface area and access to the catalytic metals. These supports are considered inert, but this does not preclude the support material from having an enhancing effect upon the activity of the catalytic compounds. Because the catalyst is used in this invention in a fixed bed, a wide choice of materials is available without regard to fluidizability or attrition. The preferred catalytic metal is copper in the form of oxide or chloride species as described above, but the invention can be practiced with any form of supported metal oxide or chloride species known to be operable as a Deacon reaction catalyst.

The following is a description by way of example only and with reference to the accompanying drawings of presently preferred embodiments of the present invention. In the drawings:

Figure 1 is a schematic diagram of a four-reactor arrangement illustrating each of the reactors engaged in one of the four principal steps of the invention, (a), (b), (c) and (d);

Figure 2 is a schematic diagram of a two-reactor arrangement wherein at least one of steps (a) or (c) is being continuously carried out; and

Figure 3 is a schematic diagram of a three-reactor arrangement in which two temperature swing reactors are combined with a third reactor which does not alternate duty with the other two reactors.

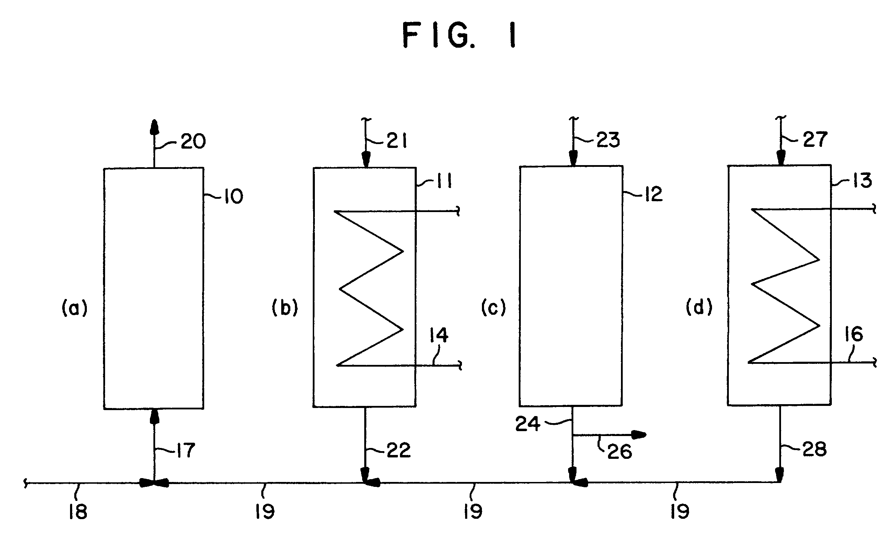

Referring to the drawings, Figure 1 depicts schematically a group of four reactors arranged to permit each of the four principal steps of the process to be carried out simultaneously. Accordingly, reactors 10, 11, 12 and 13 each contain a fixed bed of Deacon reaction catalyst. Also, each of these reactors have indirect heat exchange means such as heating or cooling coils 14 and 16 associated with reactors 11 and 13, respectively. The corresponding coils for reactors 10 and 12 are not shown.

Reactor 10 is shown performing the chlorination step (a) of the process. A stream containing HCl is introduced into reactor 10 through line 17 which is supplied either through fresh feed line 18 or recycle line 19, or both. Product is withdrawn from reactor 10 via line 20 and this product stream contains $Cl_2$ and $H_2O$ plus, possibly, $O_2$ and $N_2$. This stream is passed for further chlorine recovery, not shown and not a part of this invention.

Meanwhile, reactor 11 is undergoing heating step (b) of the process during which its catalyst bed, which has just completed step (a), is being heated to the desired reaction temperature for step (c), the oxidation step. To enhance heat transfer, a gas may be introduced via line 21. Such an enhancement may or may not be needed, depending upon the time intervals allowed for each of the four steps which, for this four-reactor embodiment, are all of the same duration. If a gas is introduced to the reactor during step (b), the exit gas is passed via line 22 to recycle line 19 for passage to reactor 10.

During this same interval, reactor 12 is engaged in oxidation step (c) and an oxygen-containing stream is introduced into reactor 12 through line 23, passing through reactor 12 in a flow path counter-current to the flow through reactor 10. If nitrogen-diluted oxygen or air is used to supply the oxygen to the process, then nitrogen is also in line 23 and passes through the system unchanged. In one embodiment of the invention, HCl is introduced to the system via line 23 with the oxygen-containing stream. In this mode of operation the reactions taking place in reactor 12 during step (c) include the Deacon reaction whereby a portion of the HCl introduced is converted directly to $Cl_2$ and $H_2O$ without having to be sorbed and retained on the catalyst bed. This reduces the amount of catalyst (sorbent) needed overall. Such a mode of operation is illustrated in Example 2.

The effluent of reactor 12 exits the reactor via line 24 containing $Cl_2$, $H_2O$ and possibly $O_2$, $N_2$ and HCl, particularly if HCl is added to the system via line 23. Under some circumstances, explained previously, the effluent of reactor 12 contains essentially no HCl, in which case a portion or all of reactor 12 effluent in line 24 can be withdrawn as product $Cl_2$ via line 26. Normally, however, even if HCl is not added via line 23, because of previous service of reactor 12 in the process cycle its effluent in line 24 will contain appreciable amounts of HCl so that, preferably, this effluent from step (c) is passed into recycle line 19 for additional processing in step (a) being carried out in reactor 10. In practice, when HCl is introduced during step (c), it is desirable to conclude step (c) with a purge to remove HCl present in the voids of the catalyst. In this case, the purge gas, which could be steam or product $Cl_2$, is introduced to reactor 12 via line 23, removed via line 24, and passed into recycle line 19.

Reactor 13 is shown engaged in the last step (d) of the cycle, cooling the catalyst bed after the oxidation step (c) in order to prepare the bed for repetition of step (a), chlorination. Cooling coil 16 is used for this service and can physically be the same coil as is used for heating the catalyst bed, such as coil 14 of reactor 11. These heat exchange means are also used to add or remove heat from the catalyst beds during the reactions of steps (a) and (c) in order to control temperature. Enhanced heat transfer during step (d) can also be achieved by flowing a gas through the catalyst bed, introducing such gas via line 27 and passing it via line 28 to recycle line 19.

In Figure 1 stream flows are in the directions of the arrows shown during the interval of the cycle in which each of the reactors is engaged in the process step indicated. At the conclusion of that interval the stream flows are changed so that reactor 10 enters the heating step (b), reactor 11 engages in oxidation step (c), reactor 12 begins cooling step (d) and reactor 13 switches to chlorination step (a). The arrangement of manifolds and valves required to effect such rotations of duty are well understood in connection with temperature swing adsorption and pressure swing adsorption operations and from that background are well within the engineering skill of the art to duplicate for the fixed bed reactors of this invention. Following the second interval, the reactor duty again progresses through the cycle so that during one complete cycle each reactor performs each of the four steps and during any one interval all four steps are being performed concurrently in the group of four reactors. In this manner the process is continuous and can achieve a steady state, accepting feed HCl and producing product $Cl_2$.

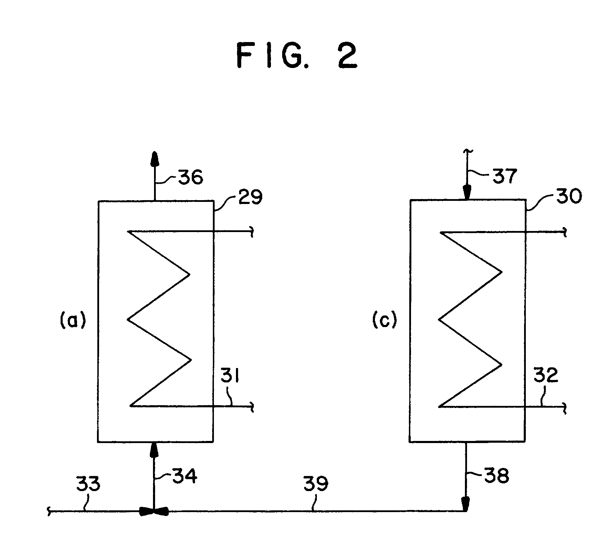

Figure 2 depicts schematically a two reactor arrangement and illustrates apparatus that would be used to perform the operations described in Examples 3 and 4. Reactors 29 and 30 are as described for Figure 1 containing heating or cooling means 31 and 32, respectively. Feed HCl in line 33 in introduced into reactor 29 via line 34. As illustrated, reactor 29 is engaged in chlorination step (a), and product effluent is withdrawn via line 36 as a stream of $Cl_2$ essentially free of HCl. In one embodiment the duration of step (a) is equal to the combination of steps (b), (c) and (d). Consequently, while step (a) is being performed in reactor 29, steps (b), (c) and (d) are being performed in sequence in reactor 30. During step (b) a heating medium is passed through coil 32 to heat the catalyst bed in reactor 30 to the temperature required for oxidation step (c). Thereafter, oxygen-containing gas is introduced into reactor 30 via line 37 for performance of step (c) and effluent is withdrawn via line 38 and passed into recycle line 39 for entry through line 34 into reactor 29 engaged in step (a). Following the oxidation step (c), the catalyst bed in reactor 30 is cooled by passing a coolant through heat transfer coil 32, thereby preparing reactor 30 for duty in step (a). The oxygen flow through line 37 can be intermittent, occurring only during step (c), or it can continue through steps (b) and (d) to assist in heat transfer within the catalyst bed. At the completion of step (a) in reactor 29, the flow pattern is changed so that feed HCl is introduced into reactor 30 in which step (a) is repeated, and reactor 29 begins the heating, oxidation and cooling steps of the cycle with effluent from reactor 29 passing to reactor 30. As an alternative to this embodiment, HCl can be introduced with the oxygen-containing stream into the reactor on step (c) duty instead of through feed line 33.

In case the effluent from step (c) is sufficiently low in HCl content that it can be taken as product, an alternative operation is possible in which the time interval for step (c) is equal to the time elapsed during the combination of steps (d), (a) and (b), in which case reactor 30 would be on oxidation duty, step (c), while reactor 29 performs the steps of cooling, chlorination and heating, steps (d), (a) and (b), respectively. Thereafter the duties for reactors 29 and 30 would switch to complete the cycle. Since this mode requires step (a) to operate intermittently, such a procedure is possible only if step (a) is not required full time for final removal of HCl from the product $Cl_2$.

The two-reactor arrangement of Figure 2 can also be operated in an alternative manner by combining steps (b) and (c) in reactor 30 and steps (a) and (d) in reactor 29. Although such operation would be somewhat less efficient than keeping all four steps separate in four reactors, for some situations the savings in equipment may justify the trade off. In this case the interval for cooling the catalyst and chlorination is the same as the interval for heating the catalyst and oxidation. Under this arrangement the system continuously performs steps (a) and (c) which are the reaction steps, the reactors switching duty back and forth between the two steps. The first portion of step (a), chlorination, includes step (d), cooling, and the first portion of step (c), oxidation, includes step (b), heating. In such a system the cooling fluid passes through coil 31 in reactor 29 counter-current to the flow of gases in step (a) so that the reactions occurring closest to the effluent line 36 are at the lowest temperature in the bed until cooling step (d) is completed. On the other hand, the heating fluid passes through coil 32 in reactor 30 cocurrent to the flow of gases in step (c) so that these gases reach operating temperature within the bed as soon as possible. One advantage of this mode of operation is that the reactant gases assist in heat transfer within the catalyst beds and there is no need to introduce separate gases for this purpose.

Other configurations of the reaction zones from those shown in the drawings are possible within the scope of the invention. For example, reactors 29 and 30 can be placed end to end so that the effluent from one can pass directly into the other, obviating recycle line 39. In such a case, one reactor can be placed atop the other. Alternatively, although somewhat more difficult to control, the two reaction zones can be enclosed within a single vertically elongate vessel equipped with upper and lower heat exchange means for independently heating and cooling upper and lower volumes of fixed bed catalyst. Feed hydrogen chloride can be introduced as a side stream between these volumes or, as explained before, with the oxygen-containing stream. The upper and lower volumes cycle between the temperature ranges of steps (a) and (c) while flow through the volumes reverses every half cycle.

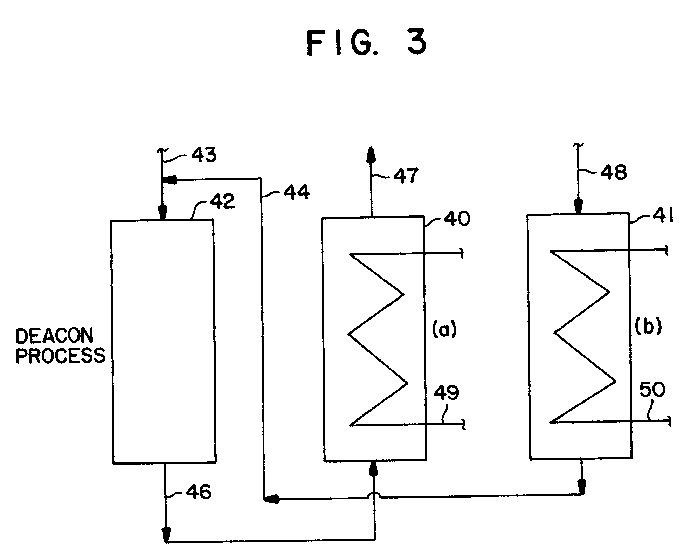

Figure 3 shows a hybrid arrangement in which two temperature swing reactors 40 and 41 are associated with a Deacon reactor 42. In this case the Deacon reactor uses its optimum catalyst, operating at a temperature in the range of 380 to 480°C. Reactor 42 receives a feed stream containing both $O_2$ and HCl, and possibly $N_2$, in line 43 augmented by $O_2$ and HCl, with possibly $N_2$, $Cl_2$ and $H_2O$, in recycle line 44 coming from reactor 41. The effluent from Deacon reactor 42 in line 46 contains $Cl_2$, $H_2O$, and HCl with possibly $O_2$ and $N_2$. This stream passes through line 46 into reactor 40 as its feed to chlorination step (a) from which the process product exits through line 47. This product is essentially free of HCl and consists primarily of $Cl_2$ and $H_2O$ with possibly some $O_2$ and $N_2$ which has passed through the system. Reactor 41, as illustrated, is on oxidation duty, step (c), and is fed by an oxygen-containing stream in line 48. Reactors 40 and 41 are equipped with heating or cooling means 49 and 50, respectively, and operate as described in connection with Figure 2 where steps (a), chlorination, and (d), cooling, are combined and steps (c), oxidation, and (b), heating, are combined.

Reactors 40 and 41 switch duty at the completion of each half-cycle and the recycle and effluent arrangement also changes so that, when the half-cycle illustrated in Figure 3 ends, Deacon reactor 42 then receives recycle material from reactor 40 (now on oxidation duty) and feeds its effluent to reactor 41 (now on chlorination duty). In a sense, in this embodiment, the temperature swing reactors are used as a purification system for the gas from the Deacon reactor and the recycle from the oxidation step (c) of the temperature swing reactors serves to supply a significant amount of the $O_2$ feed needed for the Deacon reactor. In fact, all of the $O_2$ required by the Deacon process in reactor 42 can be supplied from the temperature swing reactors. It is also within the scope of the invention to include HCl in the feed (for example, in line 48) to the temperature swing reactor on oxidation duty, step (c), so that a part or all the feed for the Deacon process comes through recycle line 44. The Deacon reactor 42 operates continuously at its reaction temperature and does not cycle through different duties and temperature levels as do the temperature swing reactors 40 and 41. Consequently, this arrangement permits the Deacon reactor 42 to be charged with the best available catalyst for the Deacon reaction and enables the temperature swing reactors 40 and 41 to use the best available sorbent system. Because of the independence of the Deacon reactor 42, it can be designed to use either a fixed bed or a fluidized bed of catalyst.

These and other advantages of the invention will be apparent to those skilled in the art from the following examples which are illustrative only.

EXAMPLE 1

Four interchangeable reactors equipped with heat transfer coils are charged with fixed beds of Deacon reaction catalyst containing copper oxide species distributed on a zeolite support. Each reactor is connected to manifold lines valved to permit each reactor to operate any one of four steps in the process cycle, namely reaction of hydrogen chloride with copper oxide species to form water and copper chloride species [step (a), chlorination]; heating the catalyst bed to oxidation temperature [step (b), heating]; reaction of oxygen with copper chloride species to form $Cl_2$ and copper oxide species [step (c), oxidation]; and cooling the catalyst bed to chlorination temperature [step (d), cooling]. A complete cycle of the four reactors through these four steps is shown in the following matrix:

| Interval | Reactor A | Reactor B | Reactor C | Reactor D |
|----------|-----------|-----------|-----------|-----------|
| I | step (a) | step (d) | step (c) | step (b) |
| II | step (b) | step (a) | step (d) | step (c) |
| II | step (c) | step (b) | step (a) | step (d) |
| IV | step (d) | step (c) | step (b) | step (a) |

All four intervals are of equal 5 minute length. Chlorination step (a) operates at 225°C and oxidation step (c) operates at 375°C. An oxygen-containing gas such as air or preferably high purity oxygen is used as the gas being fed to the oxidation step. The composition of the effluent from the oxidation step is a mixture of $Cl_2$, $H_2O$, HCl, unreacted $O_2$ and $N_2$ which entered with the air. This effluent is passed to step (a), entering the reactor with fresh HCl feed. The effluent from step (a) contains $Cl_2$, $H_2O$, unreacted $O_2$ and $N_2$ which entered the system in the air used as feed to step (c). This effluent from step (a) is essentially free of HCl and is the product of the process.

EXAMPLE 2

Example 1 is repeated except that all of the fresh HCl being fed to the system enters the reactor performing the oxidation step (c) along with oxygen containing a small amount of nitrogen as the oxygen feed for the process. Since no fresh HCl is fed to the reactor performing chlorination step (a), all of the feed to step (a) comes from the effluent of step (c). Much of the HCl fed to step (c) is converted directly to $Cl_2$ and $H_2O$ by the Deacon reaction with about 70 percent conversion. This reduces the amount of HCl which has to be chemi-sorbed in the catalytic material in step (a) by about 50 percent and, consequently reduces the amount of catalyst/sorbent needed. A material balance for this operation is given in Table 1.

Table 1

| | Flow (lb mole/min.) (kg mole/min) | | |
|----------|-----------|-----------|-----------|
| Material | Step (c) Feed | Step (c) Effluent | Step (a) Effluent |
| HCl | 8.60 (3.90) | 3.69 (1.675) | 0.00 (0.00) |
| Oxygen | 2.37 (1.075) | 0.22 (0.10) | 0.22 (0.10) |
| Nitrogen | 0.26 (0.12) | 0.26 (0.12) | 0.26 (0.12) |
| Water | | 4.30 (1.95) | 4.30 (1.95) |
| Chlorine | | 4.30 (1.95) | 4.30 (1.95) |
| Total | 11.23 (5.095) | 12.77 (5.79) | 9.08 (4.12) |

It can be seen from the above balance that since the Deacon conversion is equilibrium limited, the adsorption/chlorination step (a) is necessary in order to produce the desired essentially HCl-free product.

EXAMPLE 3

The procedure of Example 1 is followed using two reactors instead of four. The interval ratio between the four steps of the process is also changed so that, instead of the steps being of equal duration, step (a) has a duration of 15 minutes and each of steps (b), (c) and (d) has a duration of 5 minutes. While step (a) is practiced in one reactor, the other three steps proceed in sequence in the other reactor. This mode of operation is shown in the following matrix:

| Interval | Reactor A | Reactor B |
|----------|-----------|-----------|
| I | step (a) | step (b) |
| II | step (a) | step (c) |
| II | step (a) | step (d) |
| IV | step (b) | step (a) |
| V | step (c) | step (a) |
| VI | step (d) | step (a) |

The feed of-oxygen-containing gas is continuous but flow is reduced during steps (b) and (d) to that required for adequate heat transfer to achieve the desired temperatures for steps (c) and (a) within the five minute interval. Effluent compositions are the same as for Example 1.

EXAMPLE 4

The procedure of Example 3 is repeated in two reactors except that the duration of steps (a) and (d) combined is the same as the duration of steps (c) and (b) combined, which is 15 minutes. The complete cycle, therefore, is half an hour. The operational matrix is as follows:

| Interval | Reactor A | Reactor B |
|----------|-----------|-----------|
| I | steps (d) + (a) | steps (b) + (c) |
| II | steps (b) + (c) | steps (d) + (a) |

During steps (d) and (a), which are cooling and chlorination, the cooling medium in passed through coils within the catalyst bed in flow counter-current to the flow of hydrogen chloride-containing gas. During step (b) and (c), which are heating and oxidation, the heating medium is passed through the coils within the catalyst bed in flow cocurrent to the flow of oxygen containing gas. The compositions of the feed and effluent streams are the same as in Example 1.

This mode of operation can also be practiced in combination with a Deacon reactor as explained with regard to Figure 3. In that case, however, the effluent from step (c) is passed to the feed of the Deacon reactor to augment its feed stream of HCl and $O_2$, and the Deacon reactor effluent containing $Cl_2$, $H_2O$, HCl, $O_2$ and $N_2$, is passed to whichever temperature swing reactor is performing step (a).

The principal advantages of the fixed bed process of this invention are higher product purity, which eliminates any need for a costly HCl removal and recycle system, and avoidance of fluidized bed catalysis in the temperature swing reactors, thereby permitting a wider choice of catalyst and carrier materials than are possible under the limitations of fluidization. Also the invention obviates the need to move catalyst from one reactor to another with all the engineering problems which that entails. Other embodiments and advantages of our invention will be apparent to those skilled in the art from the foregoing disclosure without departing from the scope of the invention as defined in the following claims.

**Claims**

1. A process for carrying out a chemical reaction which proceeds by two catalytically assisted mechanisms involving different thermodynamic equilibria wherein each mechanism proceeds most favorably within a temperature range distinct from the other, the total reaction being expressed as $A + B \leftrightarrow C + D$, which comprises:

   (a) passing a feed stream containing reactant A into a reaction zone wherein said reactant A is contacted with a fixed bed of catalytic material at a temperature within a first "lower" range under conditions operative to convert reactant A to product C and in so doing changing said catalytic material to a modified form;
   (b) redirecting said feed stream of reactant A into another reaction zone for repetition of step (a) and heating said bed of catalytic material in modified form from step (a) to a temperature within a second "upper" range above and distinct from said lower range of step (a);
   (c) passing a feed stream containing reactant B into the reaction zone containing the fixed bed of catalytic material in modified form which has been heated in step (b) and contacting said reactant B with said modified catalytic material at a temperature within said upper range under conditions operative to convert reactant B to product D and in so doing changing said modified catalytic material back to a form operative in step (a), and withdrawing an effluent stream containing product D; and
   (d) redirecting said feed stream containing reactant B into another reaction zone for repetition of step (c) and cooling said catalytic material in the reaction zone wherein step (c) has just been completed to a temperature for repetition of step (a);

   said steps (a) through (d) being carried out in a combination of fixed bed chambers connected so that the process in each chamber progresses repetitively through steps (a) through (d) in sequence.

2. A process of Claim 1, wherein at least one of steps (a) and (c) is continuously occurring in one or more chambers.

3. A process of Claim 1 or Claim 2, wherein said effluent stream of step (c) is at least partially recycled to a step (a).

4. A process of any one of the preceding claims, wherein said reactant A is HCl, reactant B is $O_2$, product C in $H_2O$ and product D is $Cl_2$.

5. A process of Claim 4 which comprises:

   a) passing an HCl-containing (feed) stream into a defined volume in contact with a fixed bed of Deacon reaction catalyst containing supported metal oxide species at a temperature in the range of 180 to 290°C to convert at least a portion of said metal oxide to metal chloride species, and withdrawing an effluent stream containing $Cl_2$ as product essentially free of HCl;
   b) redirecting said HCl-containing stream to another volume for repetition of step (a) and heating said bed of catalyst having just completed step (a) to a temperature in the range of 300 to 400°C;
   c) contacting the heated catalyst of step (b) with an oxygen-containing (feed) stream at a temperature in the range of 300 to 400°C to form metal oxide species in said heated catalyst suitable for use in step (a) and withdrawing an effluent stream containing $Cl_2$; and
   d) redirecting said oxygen-containing stream to another volume for repetition of step (c) and cooling said bed of catalyst having just completed step (c) to a temperature in the range of 180 to 290°C, thereby preparing said catalyst bed for repeating step (a);

   said steps (a) through (d) being carried out in a combination of fixed bed chambers connected so that the process in each chamber progresses repetitively through steps (a) through (d) in sequence.

6. A process of Claim 5, wherein step (a) is continuously occurring in one or more chambers.

7. A process of Claim 5 or Claim 6, wherein step (a) is carried out at a temperature in the range of 200 to 250°C, step (c) is carried out at a temperature in the range of 350 to 400°C, and the heating and cooling steps (b) and (d), respectively, are adjusted accordingly.

8. A process of any one of Claims 5 to 7, wherein the effluents of steps (c) do not contain an appreciable amount of HCl and are recovered as product.

9. A process of Claim 4 or Claim 5, wherein the effluents of steps (c) contain HCl and are at least partially recycled to a step (a) directly or through an intermediate Deacon reactor.

10. A process of Claim 9, wherein the effluents of steps (c) are passed directly to a step (a) to provide at least a part of said HCl-containing stream of step (a).

11. A process of Claim 10, wherein HCl is passed to step (c) with said oxygen-containing stream of step (c) and the effluent of step (c) provides the HCl-containing stream of step (a).

12. A process of Claim 11, wherein the catalyst bed is purged to remove HCl retained in the catalyst voids following step (c).

13. A process of Claim 9, wherein the effluents of steps (c) are fed to a reactor containing a Deacon reaction catalyst and operating at a temperature in the range of 330 to 480°C to oxidize HCl to provide an effluent containing $Cl_2$ and HCl and which is passed to a step (a) to provide the HCl-containing feed stream thereof.

14. A process of Claim 13, wherein said reactor operates with a fluidized bed of catalyst wherein said catalyst does not leave the reactor.

15. A process of Claim 13 or Claim 14, wherein the total feed to said reactor is supplied by the effluents of steps (c) with HCl added as needed to the oxygen-containing feed stream of step (c).

16. A process of any one of the preceding claims, wherein gas flow through the catalyst beds in maintained during steps (b) and (d) to enhance radial heat transfer in the beds.

17. A process of any one of the preceding claims, wherein any gas driven off the catalyst bed during the heating in step (b) is recycled to a step (a) cocurrent with said feed stream of step (a).

18. A process of any one of the preceding claims, wherein the process is carried out in four fixed bed catalytic chambers, steps (a) through (d) are of equal duration, and each of steps (a) through (d) is continuously occurring in one of said four chambers.

19. A process of any one of Claims 1 to 17, wherein there are two fixed bed catalytic chambers, step (a) or (c) is equal in duration to the other three steps, and the step of longer duration occurs in one chamber while the other three steps occur in sequence in the other chamber, after which each chamber switches duty with the other at the completion of each half-cycle of steps (a) through (d).

20. A process of Claim 19, wherein the duration of step (a) is equal to the duration of the combination of steps (b), (c) and (d).

21. A process of any one of Claims 1 to 17, wherein the process is carried out in two chambers, the duration of steps (a) and (d) is equal to the duration of steps (b) and (c), steps (a) and (d) are carried out together in a first chamber, said cooling being done by indirect heat exchange with a coolant passing counter-current to the flow of said feed stream of step (a), steps (b) and (c) are carried out together in a second chamber, said heating being done by indirect heat exchange with a heating medium passing cocurrent with said feed stream of step (c), said first and second chambers alternating duty on the completion of each half-cycle of steps (a) through (d).

FIG. 1

(a)

(b)

(c)

(d)

FIG. 2

# FIG. 3

EP 0 861 803 A1

**European Patent Office**

# EUROPEAN SEARCH REPORT

Application Number

EP 98 30 1324

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 4 959 202 A (MINET R. G. ET AL) 25 September 1990<br>* claim 1 * | 1,4 | C01B7/04 |
| A | FR 2 643 893 A (SOCIEDAD ESPANOLA DE CARBUROS METALICOS) 7 September 1990<br>* claim 1 * | 1,4 | |
| D | & GB 2 229 430 A | | |
| A | WO 96 15066 A (UNIVERSITY OF SOUTHERN CALIFORNIA) 23 May 1996<br>* claim 1 * | 1,4 | |
| | | | **TECHNICAL FIELDS SEARCHED (Int.Cl.6)**<br>C01B |

The present search report has been drawn up for all claims

| Place of search | Date of completion of the search | Examiner |
|---|---|---|
| BERLIN | 26 May 1998 | Clement, J-P |

EPO FORM 1503 03.82 (P04C01)